# EUROPÄISCHE PATENTSCHRIFT

(11) **EP 1 349 999 B1**
(45) Veröffentlichungstag und Bekanntmachung des Hinweises auf die Patenterteilung: **10.11.2004**
(21) Anmeldenummer: 01984849.8
(22) Anmeldetag: 14.12.2001
(51) Int. Cl.: E05B 53/00, F16C 1/22

(54) **VORRICHTUNG ZUR BETÄTIGUNG EINES VERSCHLUSSES BEI EINER TÜR ODER EINER KLAPPE, INSBESONDERE BEI FAHRZEUGEN**
DEVICE FOR ACTUATING A CLOSURE ON A DOOR OR A SHUTTER, ESPECIALLY ON A VEHICLE
DISPOSITIF POUR ACTIONNER LA FERMETURE D'UNE PORTE OU D'UN VOLET, NOTAMMENT SUR UN VEHICULE

(30) Priorität: 09.01.2001 DE 10100636
(43) Veröffentlichungstag der Anmeldung: 08.10.2003
(73) Patentinhaber: Huf Hülsbeck & Fürst GmbH & Co. KG, 42551 Velbert (DE)
(72) Erfinder: KALESSE, Michael, 40885 Ratingen (DE)
(74) Vertreter: Mentzel, Norbert, Dipl.-Phys.
(86) Internationale Anmeldenummer: PCT/EP2001/014813
(87) Internationale Veröffentlichungsnummer: WO 2002/055818

(56) Entgegenhaltungen:
- DE-A- 19 808 375
- DE-C- 4 024 062
- US-A- 6 116 111

## Beschreibung

Eine solche Vorrichtung besteht aus einem beweglichen Griff, der in einem Träger gelagert ist. Der Träger ist ortsfest an der Tür angeordnet. Bei Betätigung des Griffs wird dessen Bewegung über einen Bowdenzug zu einem Verschluss weitergeleitet, der die Tür dann freigibt. Der Bowdenzug besteht aus einem Mantel und einer darin längsverschieblichen Seele. Die Seele ist mit ihrem griffseitigen Ende an einem bei Betätigung des Griffs mitbeweglichen Aktivteil angeschlossen. Das griffseitige Mantel-Endstück wird an einer Stützschulter des Trägers festgehalten.

Bei der bekannten Vorrichtung dieser Art (DE 197 44 384 A1) ist das Stirnende des Mantel-Endstücks unmittelbar an der Stützschulter abgestützt. Bei der Ausbildung der Vorrichtung und des Verschlusses sowie beim Einbau dieser Bauteile in der Tür ergeben sich Toleranzen. Nach längerem Gebrauch des Bowdenzugs ergeben sich bleibende Dehnungen der durch die Griffbetätigung beanspruchten Seele, die eine Längenänderung des Bowdenzugs erfordern. Solche Korrekturen am Bowdenzug sind umständlich und zeitaufwendig, weil sie im Einbauzustand dieser Bauteile erfolgen müssen. Im eingebauten Zustand ist aber der Bowdenzug nur schlecht zugänglich.

Der Erfindung liegt die Aufgabe zugrunde, eine Vorrichtung der im Oberbegriff des Anspruches 1 genannten Art zu entwickeln, der eine schnelle und zuverlässige Änderung der Mantellänge gegenüber dem Bowdenzug zulässt. Dies wird erfindungsgemäß durch die im Anspruch 1 angegebenen Maßnahmen erreicht, denen folgende besondere Bedeutung zukommt.

Eine Wirklage des Distanzstücks liegt vor, wenn das Distanzstück zwischen der Stützfläche am Träger einerseits und einer Gegenschulter am Mantel-Endstück andererseits angeordnet ist. In dieser Wirklage vergrößert das Distanzstück die effektive Länge des Mantels gegenüber dem Träger. Das Mantel-Endstück ist auf die Stützfläche hin kraftbelastet und hält in der Wirklage des Distanzstücks das Mantel-Endstück in einer Distanz zur Stützfläche des Trägers, die dem Dickenmaß des Distanzstücks entspricht. Das Distanzstück lässt sich in eine unwirksame Lage überführen, indem man es aus dem Raum zwischen der Stützschulter des Trägers und der Gegenschulter am Mantel-Endstück entfernt. Es findet dann die gewünschte Korrektur statt. Das Entfernen kann durch eine am Distanzstück vorgesehene Handhabe erfolgen. Aufgrund einer axialen Kraftbelastung kommt dann die Gegenschulter vom Mantel-Endstück unmittelbar an der Stützfläche zur Anlage, wodurch die effektive Länge des Mantels gegenüber dem Träger verkürzt ist. Die Handhabe kann durch geeignete Bohrungen in der Tür von außen zugänglich sein. Die vorerwähnte Korrektur der Mantellänge lässt sich also im Montagezustand der Bauteile schnell und bequem von außen korrigieren.

Weitere Maßnahmen und Vorteile der Erfindung ergeben sich aus den weiteren Ansprüchen, der nachfolgenden Beschreibung und den Zeichnungen. In den Zeichnungen ist die Erfindung in einem Ausführungsbeispiel dargestellt. Es zeigen:
- Fig. 1: in perspektivischer rückseitiger Ansicht den zur Lagerung des nicht näher gezeigten Griffes dienenden Träger, an welchem das eine Ende des Bowdenzugs montiert ist,
- Fig. 2: einen Vertikalschnitt durch den Träger von Fig. 1 längs der dortigen Schnittlinie II - II,
- Fig. 2a: den mit IIa bezeichneten Ausschnitt von II,
- Fig. 3: den gleichen Vertikalschnitt durch den Träger wie in Fig. 2, nachdem ein Distanzstück zur Positionierung des Bowdenzugs entfernt worden ist,
- Fig. 3a,: in Analogie zu Fig. 2a, den entsprechenden, mit IIIa gekennzeichneten Ausschnitt aus Fig. 3,
- Fig. 4,: in starker Vergrößerung, ein Querschnitt durch ein Detail der Vorrichtung längs der Schnittlinie IV - IV von Fig. 2 und
- Fig. 5,: in entsprechender Vergrößerung, ein weiteres Detail der in Fig. 2 gezeigten Vorrichtung, längs der dortigen Schnittlinie V - V.

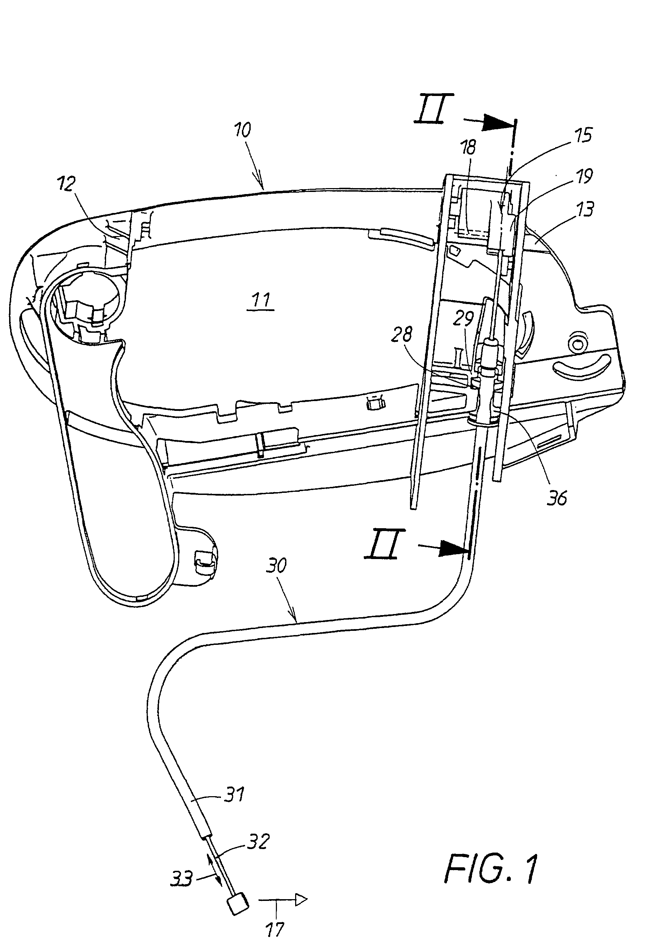

Ein Träger 10 wird an der Rückseite einer Außenverkleidung der Tür befestigt. Der Träger 10 kann, wie Fig. 1 zeigt, rahmenförmig ausgebildet sein und im Rahmeninneren ein Bauelement aufnehmen, welches aus einer Mulde mit einem Griff besteht, der in diesem Fall als Klappgriff ausgebildet ist. Die Mulde ist in ihrer Form und Farbe an die jeweilige Außenverkleidung des Fahrzeugs anpassbar. Der Träger 10 besitzt Lagerstellen 12, 13 und Aussparungen 14 für eine Verriegelung des montierten Mulden-Bauelements.

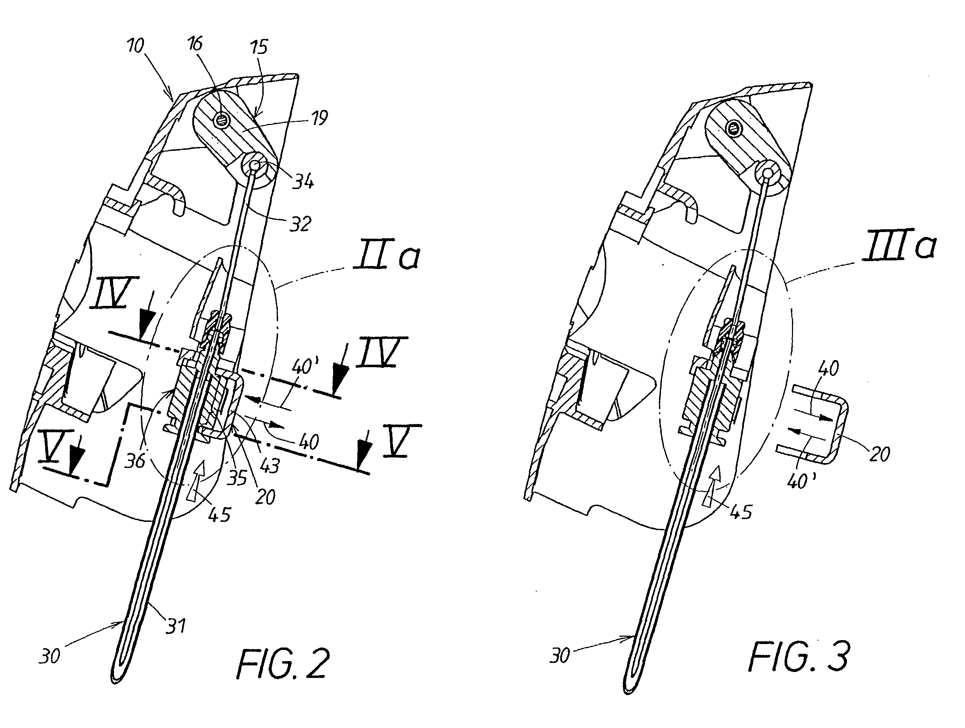

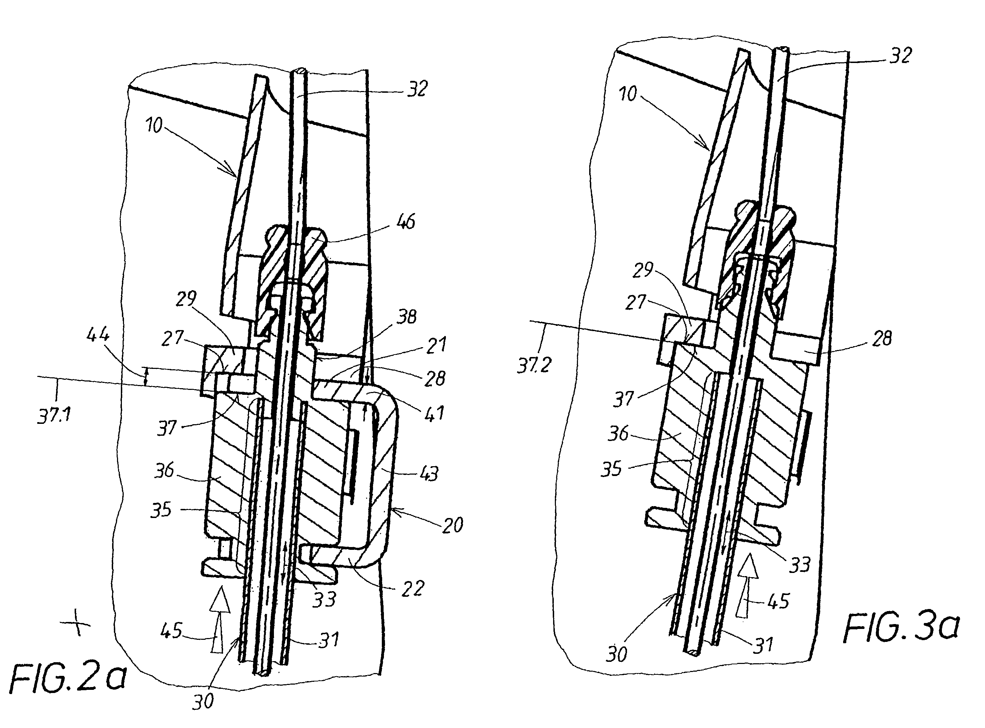

Zum Öffnen der Tür muss der nicht näher gezeigte Griff betätigt werden. Die sich dabei ergebende Bewegung des Griffs nimmt ein im Träger 10 bei 16 drehgelagerter Umlenkhebel 15 auf, der die Aufgabe hat, diese Bewegung an einen nicht näher gezeigten, durch den Pfeil in Fig. 1 in seiner Lage verdeutlichten Verschluss 17 weiterzugeben. Dies geschieht mittels eines Bowdenzugs 30 der aus einem Mantel 31 und einer im Sinne des Pfeils 33 darin längsverschieblichen Seele 32 besteht. Der in der Mulde gelagerte Griff besitzt eine Zahnung, die mit einer in Fig. 1 angedeuteten Gegenzahnung 18 des Umlenkhebels 15 zusammenwirkt. Die Gegenzahnung 18 befindet sich an einem Eingangsarm des Umlenkhebels 15, während der in Fig. 2 im Schnitt dargestellte Ausgangsarm 19 dieses Umlenkhebels 15 an der Anlenkstelle 34 das griffseitige Ende der Seele 32 gelenkig festhält. Das entsprechende griffseitige Endstück 35 des Mantels wird von einem Halter 36 umschlossen, der ein bestimmtes noch näher zu beschreibendes Umrissprofil besitzt. Es liegt eine axialfeste Verbindung zwischen dem Mantel-Endstück 35 und dem Halter 3 6 vor.

Fig. 1 und 2 zeigen den normalerweise vorliegenden Montagefall des Halters 36 vom Bowdenzug 20 im Träger 10. Der Träger 10 besitzt eine aus Fig. 1 ersichtliche Aufnahme 28 für den Mantel-Halter 36. Das ist auch aus dem vergrößerten Schnitt in Fig. 2a zu erkennen. Die Aufnahme 28 ist von einer axialen Endwand 29 begrenzt, welche eine in ihrer Funktion noch näher zu erläuternde Stützschulter 27 definiert. Die Stützschulter 27 bestimmt die axiale Lage des montierten Mantel-Halters 36. Diese Halterlage kann, wie ein Vergleich zwischen Fig. 2 und 3 zeigt, unterschiedlich sein, in Abhängigkeit davon, ob eine U-förmige Klammer 20 am Mantel-Halter 36 angreift (Fig. 2, 2a) oder nicht (Fig. 3, 3a). Die Lage von Fig. 2, 2a soll nachfolgend "Wirklage" und diejenige von Fig. 3, 3a mit "Freigabelage" der Klammer 20 bezeichnet werden.

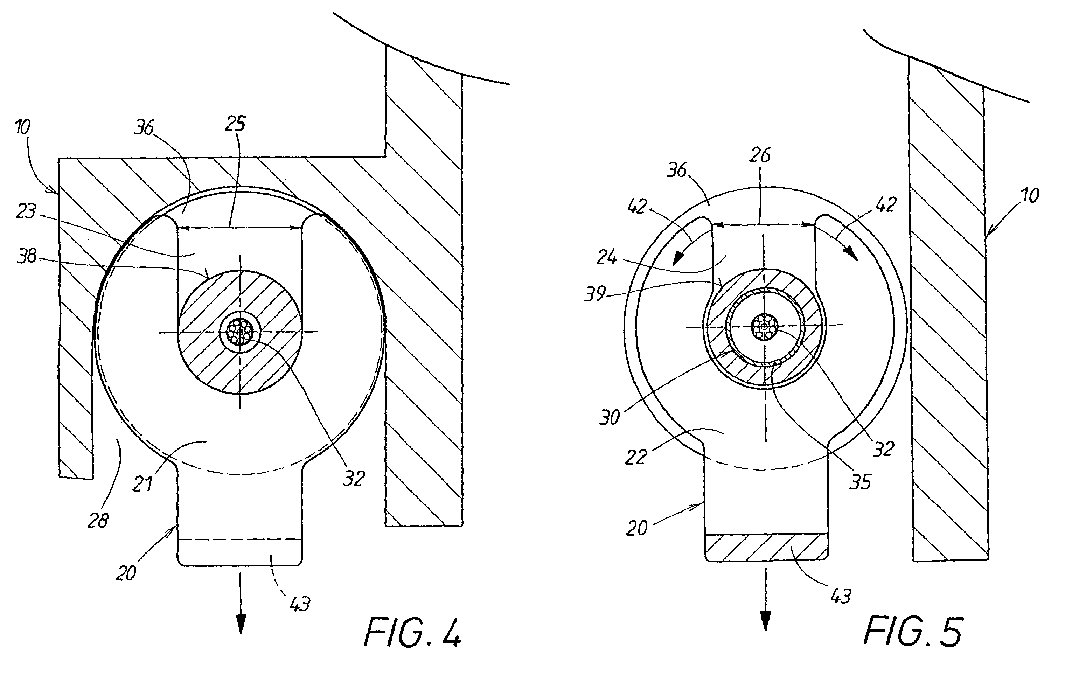

Die beiden U-Schenkel 21, 22 der Klammer 20 sind aus Fig. 2a und aus den Vergrößerungen von Fig. 4 und 5 zu erkennen, welche, wie bereits erwähnt wurde, die durch die Schnittlinien IV - IV bzw. V - V von Fig. 2 gekennzeichneten vergrößerten Querschnitte der Vorrichtung von Fig. 2 zeigen. Beide Schenkel 21, 22 sind jeweils mit einer Gabelöffnung 23, 24 versehen, die ein zueinander unterschiedliches Gabelprofil aufweist. In der Wirklage der Klammer 20 umgreifen die Gabelöffnungen 23 bzw. 24 ihnen zugeordnete Taillen 38, 39 des Mantel-Halters 36. Die mit 25 in Fig. 4 gekennzeichnete lichte Weite 25 der Gabelöffnung 23 von Fig. 4 ist größer/gleich dem Querschnitt der zugehörigen Taille 38 ausgebildet, während die entsprechende lichte Weite 26 kleiner als der zugehörige Querschnitt der Taille 39 ist. Deshalb kommt es beim Aufstecken und Abziehen der Klammer zwischen der Gabelöffnung 24 und der Taille 39 zu elastischen Deformationen im Sinne der durch Pfeile in Fig. 5 verdeutlichten Spreizbewegung 42 der beiden Gabelzinken. Dadurch wird die verengte lichte Weite 26 der Gabelöffnung 24 zeitweise elastisch vergrößert.

Diese Elemente 24, 39 wirken also wie "Rastmittel", die nach Art eines Clips die Wirklage der Klammer 20 am Mantel-Halter 36 sichern. Die Abzieh- und Aufsteckbewegung 40, 40' ist in den Fig. 2, 3 durch Pfeile verdeutlicht. Diese Abzieh- und Aufsteckbewegungen 40, 40' erfolgen quer zum Längsverlauf des Bowdenzugs 30 in diesem Bereich. Das Abziehen 40 der Klammer 20 erfolgt durch ein Werkzeug, z.B. einen Schraubendreher. Das Werkzeug wird außerhalb der Tür bis zu der im Türinneren befindlichen Stelle der dort befestigten Vorrichtung geführt und hintergreift den U-Steg 43 der Klammer 20.

In der Wirklage gemäß Fig. 2a ist der erste U-Schenkel 21 mit seinem Dickenmaß 41 wirksam. Die Außenfläche des Gabelschenkels 21 befindet sich nämlich in der Aufstecklage der Klammer 20 an der erwähnten Stützschulter 27 der axialen Endwand 29, während die Innenfläche des Gabelschenkels 21 sich an einer unterhalb der dortigen Taille 38 befindlichen Gegenschulter 37 des Mantel-Halters 36 abstützt. Der U-Schenkel 21 wirkt dann als "Distanzstück", welches für einen Abstand 44 zwischen den beiden Schultern 27, 37 sorgt. Dadurch ist die Lage des Mantel-Endstücks 35 im Mantel-Halter 36 definiert; diese Wirklage ist in Fig. 2a durch die Hilfslinie 37.1 gekennzeichnet. Bezogen auf die Stützfläche 37 ist über das Distanzstück 21 die wirksame Länge des Bowdenzug-Mantels 31 verlängert. Auf den Mantel 31 des Bowdenzugs 30 wirkt die in Fig. 2 mit 45 bezeichnete axiale Kraftbelastung. Diese Kraftbelastung 45 sorgt für einen Andruck der Gegenschulter 37 vom Mantel-Halter 36 über das Distanzstück 21 auf die im Träger 10 ortsfeste Stützschulter 27.

Bei abgezogener Klammer 20 ändern sich die Verhältnisse, wie Fig. 3 und 3a zeigen. Jetzt sorgt die axiale Kraft 45 das der Mantel-Halter 36 mit seiner Gegenschulter 37 unmittelbar an der Stützschulter 37 anliegt. In dieser, durch die entsprechende Hilfslinie 37.2 in Fig. 3a verdeutlichten "Freigabelage" befindet sich das im Halter 36 befestigte Mantel-Endstück 35 vom Bowdenzug 30 in einer um das Dickenmaß 41 der entfernten Klammer 20 näheren Position gegenüber der ortsfesten Stützschulter 27.

Es versteht sich, dass eine ganze Schar von Distanzstücken 21 in Form von verschiedenen Klammern in Bereitschaft sein könnte, die zueinander unterschiedliche Dickenmaße 41 aufweisen. Durch Auswahl der entsprechenden Klammer ließe sich dann die Distanz 44 zwischen den beiden Schultern 27, 37 in der gewünschten individuellen Weise anpassen. Das Aufstecken 40' und Abziehen 40 der diversen Klammern 20 kann dabei, wie bereits erwähnt wurde, von der Außenseite der Tür aus erfolgen. Damit ist während des Gebrauchs der Vorrichtung eine Nachjustierung des Bowdenzugs schnell und bequem möglich.

Anstelle einer Klammer 20 könnten auch plattenförmige Distanzstücke 21 verwendet werden. Auch dabei könnten Rastmittel in Form von Rastvorsprünge und Rastvertiefungen vorgesehen sein, welche die Wirklage eines solchen Distanzstücks gegenüber dem Mantel-Endstück 35 sichern.

Ausweislich der Fig. 2a ist das Ende des Mantel-Halters 36 vor der Taille 38 abgesetzt und hinterschnitten, um eine Kappe 46 aus Elastomer-Material zu verankern. Die Kappe 46 hat eine axiale Durchführung für die Bowdenzug-Seele 32 und dient als Dichtmittel.

### Bezugszeichenliste:

- 10: Träger
- 11: Rahmeninnenraum von 10
- 12: erste Lagerstelle von 10
- 13: zweite Lagerstelle von 10
- 14: Aussparung von 10
- 15: Umlenkhebel an 10, Aktivteil
- 16: Drehlagerung von 15 an 10
- 17: Lage des Verschlusses
- 18: Gegenzahnung am ersten Arm von 15
- 19: zweiter Arm von 15, Ausgangsarm
- 20: U-förmige Klammer
- 21: erster U-Schenkel von 20, Distanzstück (Fig. 4)
- 22: zweiter U-Schenkel von 20 (Fig. 5)
- 23: Gabelöffnung von 21 (Fig. 4)
- 24: Gabelöffnung von 22, Rastmittel (Fig. 5)
- 25: lichte Weite am Ende von 23 (Fig. 4)
- 26: lichte Weite am Ende von 24 (Fig. 5)
- 27: Stützschulter bei 29 von 10
- 28: Aufnahme für 36 in 13
- 29: axiale Endwand von 28
- 30: Bowdenzug
- 31: Mantel von 30
- 32: Seele von 30
- 33: Längsverschiebung von 32 in 31
- 34: Anlenkstelle von 32 an 19
- 35: Mantelendstück von 31 in 36
- 36: Mantel-Halter von 35
- 37: Gegenschulter an 3 6 bzw. 35
- 37.1: Wirklage von 35 (Fig. 2a)
- 37.2: Freigabelage von 35 (Fig. 3 a)
- 38: Taille von 36 für 21 (Fig. 4)
- 39: Taille von 36 für 22, Rastmittel (Fig. 5)
- 40: Abziehbewegung von 20 gegenüber 36 (Fig. 2)
- 40': Aufsteckbewegung von 20 auf 36 (Fig. 2)
- 41: Dickenmaß von 41 (Fig. 2a)
- 42: Spreizbewegung bei 24 (Fig. 5)
- 43: U-Steg von 20, Handhabe (Fig. 2, 2a, 5)
- 44: Abstand zwischen 27, 37 (Fig. 2a)
- 45: axiale Kraftbelastung von 31 gegenüber 13
- 46: Kappe bei 36 (Fig. 2a)

## Patentansprüche

1. Vorrichtung zur Betätigung eines Verschlusses (17) bei einer Tür oder einer Klappe, insbesondere bei Fahrzeugen,
mit einem ortsfest in der Tür sitzenden Träger (10)
und mit einem demgegenüber beweglichen Griff, der über einen Bowdenzug (30) auf den Verschluss (17) wirkt,
wobei der Bowdenzug (30) aus einem Mantel (31) und aus einer darin längsverschieblichen Seele (32) besteht,
und die Seele (32) mit ihrem griffseitigen Ende an einem bei Betätigung des Griffs mitbeweglichen Aktivteil (15) angeschlossen ist,
während das griffseitige Mantel-Endstück (35) an einer ortsfesten Stützschulter (27) des Trägers (10) festgehalten wird,
**dadurch gekennzeichnet ,**
**dass** zwischen der Stützschulter (27) am Träger (10) einerseits und einer Gegenschulter (37) am Mantel-Endstück (35) andererseits ein Distanzstück (21) angeordnet ist,
**dass** das Mantel-Endstück (35) auf die Stützschulter (27) hin kraftbelastet (45) ist und in der Wirklage (37.1) des Distanzstücks (21) das Mantel-Endstück (35) sich - entsprechend dem Dickenmaß (41) des Distanzstücks (21) - in Abstand (44) zur Stützfläche (27) befindet
und **dass** das Distanzstück (21) eine Handhabe (43) aufweist, mit welcher das Distanzstück (21) aus seiner Wirklage (37.1) in eine Freigabelage (37.2) überführbar (40) ist, wo die Gegenschulter (37) vom Mantel-Endstück (35) unmittelbar an der Stützfläche (27) anliegt.

2. Vorrichtung nach Anspruch 1, **dadurch gekennzeichnet, dass** das Distanzstück (21) mit seiner Handhabe (43) aus seiner Freigabelage (37.2) bedarfsweise wieder in die Wirklage (37.1) zwischen dem Mantel-Endstück (35) und der Stützfläche (27) einführbar (40') ist.

3. Vorrichtung nach Anspruch 1 oder 2, **dadurch gekennzeichnet, dass** dem Bowdenzug (30) eine Schar von Distanzstücken mit unterschiedlichen Dickenmaßen zugeordnet ist, von denen wahlweise eines auswählbar und in die Wirklage (37.1) zwischen dem Mantel-Endstück (35) und der Stützfläche (27) einführbar ist.

4. Vorrichtung nach Anspruch 1 oder 2, **dadurch gekennzeichnet, dass** - bezüglich des Verlaufs des Bowdenzugs (30) - das Einführen (40') und Entfernen (40) des Distanzstücks (21) in Querrichtung erfolgt.

5. Vorrichtung nach einem der Ansprüche 1 bis 3, **dadurch gekennzeichnet, dass** das Distanzstück mehrere zueinander unterschiedliche Dickenmaße aufweist, von denen wahlweise jenes in die Wirklage (37.1) zwischen dem Mantel-Endstück (35) und der Stützschulter (27) gebracht wird, welches den gewünschten Abstand (44) zwischen der Stützschulter (27) und der Gegenschulter (37) erzeugt.

6. Vorrichtung nach einem der Ansprüche 1 bis 5, **dadurch gekennzeichnet, dass** das Distanzstück (21) in seiner Wirklage (37.1) durch Rastmittel (24, 39) gesichert ist.

7. Vorrichtung nach einem der Ansprüche 1 bis 6, **dadurch gekennzeichnet, dass** das Distanzstück (21) gegabelt (23) ist und das Mantel-Endstück (35) tailliert (38) ist,
wobei in der Wirklage (37.1) eine Gabelöffnung (23) die Taille (38) vom Mantel-Endstück (35) umgreift,
und dass die Handhabe (43) des Distanzstücks (21) am der Gabelöffnung (23) gegenüberliegenden Ende sitzt.

8. Vorrichtung nach Anspruch 6 und 7, **dadurch gekennzeichnet, dass** die Gabel (24) und die Taille (39) selbst Rastmittel bilden, wobei die Gabelschenkel in der Wirklage (37.1) den Taillenquerschnitt (39) formschlüssig umgreifen und die Gabelschenkel und/oder der Taillenquerschnitt elastisch nachgiebig (42) ausgebildet sind.

9. Vorrichtung nach Anspruch 7 oder 8, **dadurch gekennzeichnet, dass** das Distanzstück (21) der eine Schenkel einer U-förmigen Klammer (20) ist, deren U-Steg (43) als Zughandhabe zum Lösen (40) des Distanzstücks (21) vom Mantel-Endstück (35) dient.

10. Vorrichtung nach Anspruch 9, **dadurch gekennzeichnet, dass** der andere U-Schenkel (22) die Rastmittel (24) besitzt, mit denen die U-Klammer (20) am Mantel-Endstück (35) gesichert ist.

## Claims

1. Device for actuating a catch (17) in a door or flap, particularly in vehicles,
said device having a carrier (10) located in a stationary manner in the door,
and having a grip which is movable in relation thereto and acts on the catch (17) via a Bowden cable (30);
wherein said Bowden cable (30) consists of a sheath (31) and a core (32) which is longitudinally displaceable therein,
and said core (32) is connected, by its end nearest the grip, to an active part (15) which can be moved in conjunction with the grip when the latter is actuated,
while the end piece (35) of the sheath at the grip end is held fast on a stationary supporting shoulder (27) on the carrier (10);
**characterised in that**
a distance piece (21) is disposed between the supporting shoulder (27) on the carrier (10) on the one hand, and a counter-shoulder (37) on the end piece (35) of the sheath on the other;
that the end piece (35) of the sheath is force-loaded (45) towards the supporting shoulder (27) and, when the distance piece (21) is in the active location (37.1), the end piece (35) of the sheath is located (in a manner corresponding to the thickness dimension (41) of said distance piece (21)) at a distance (44) from the supporting face (27);
and that the distance piece (21) has a handle (43) by which said distance piece (21) can be transferred (40) out of its active location (37.1) and into a releasing location (37.2) in which the counter-shoulder (37) of the end piece (35) of the sheath rests directly against the supporting face (27).

2. Device according to claim 1, **characterised in that**, from its releasing location (37.2), the distance piece (21) can, if necessary, be introduced again, by its handle (43), into the active location (37.1) between the end piece (35) of the sheath and the supporting face (27).

3. Device according to claim 1 or 2, **characterised in that** there is associated with the Bowden cable (30) a group of distance pieces with different thickness dimensions, of which one can be selected according to choice and introduced into the active location (37.1) between the end piece (35) of the sheath and the supporting face (27).

4. Device according to claim 1 or 2, **characterised in that** the introduction (40') and removal (40) of the distance piece (21) takes place in the transverse direction (referred to the course of the Bowden cable (30)).

5. Device according to one of claims 1 to 3, **characterised in that** the distance piece has a number of thickness dimensions which differ from one another and of which each is brought, according to choice, into the active location (37.1) between the end piece (35) of the sheath and the supporting shoulder (27), and this produces the desired distance (44) between the supporting shoulder (27) and the counter-shoulder (37).

6. Device according to one of claims 1 to 5, **characterised in that** the distance piece (21) is secured in its active location (37.1) by latching means (24, 39).

7. Device according to one of claims 1 to 6, **characterised in that** the distance piece (21) is forked (23) and the end piece (35) of the sheath is waisted (38),
an opening (23) in the fork engaging, in the active location (37.1), round the waist (38) of the end piece (35) of the sheath;
and that the handle (43) of the distance piece (21) is located at the opposite end from the opening (23) in the fork.

8. Device according to claim 6 and 7, **characterised in that** the fork (24) and the waist (39) themselves have latching means, the legs of said fork engaging round the waist cross-section (39) in a form-locking manner in the active location (37.1) and the legs of the fork and/or the waist cross-section being of elastically compliant construction (42).

9. Device according to claim 7 or 8, **characterised in that** the distance piece (21) is one leg of a U-shaped bracket (20), the web (43) of whose U serves as a pull-handle for detaching (40) the distance piece (21) from the end piece (35) of the sheath.

10. Device according to claim 9, **characterised in that** the other leg (22) of the U possesses the latching means (24) by which the U-bracket (20) is secured on the end piece (35) of the sheath.

## Revendications

1. Dispositif pour actionner une fermeture (17) sur une portière ou un volet, en particulier pour des véhicules,
avec un support (10), monté de façon localement fixe dans la portière,
et avec une poignée, mobile par rapport à celui-ci, agissant sur la fermeture (17), par l'intermédiaire d'un câble de Bowden (30),
le câble de Bowden (30) étant formé d'une enveloppe (31) et d'une âme (32) y étant déplaçable longitudinalement,
et l'âme (32) étant raccordée, par son extrémité côté poignée, à une partie active (15), déplacée conjointement lors de l'actionnement de la poignée,
tandis que la pièce d'extrémité d'enveloppe (35), située côté poignée, est maintenue fixée à un épaulement d'appui (27), localement fixe, du support (10),
**caractérisé en ce que**,
entre l'épaulement d'appui (27) sur le support (10), d'une part, et un contre-épaulement (37), sur la pièce d'extrémité d'enveloppe (35), d'autre part, est disposée une pièce d'espacement (21),
**en ce que** la pièce d'extrémité d'enveloppe (35) est chargée par une force (45), sur l'épaulement d'appui (27) et, en position active (37.1) de la pièce d'espacement (21), la pièce d'extrémité d'enveloppe (35) se trouve - de manière correspondante à l'épaisseur (41) de la pièce d'espacement (21) - à distance (44) de la face d'appui (27),
et **en ce que** la pièce d'espacement (21) présente une manette (43), à l'aide de laquelle la pièce d'espacement (21) peut être passée (40), de sa position active (37.1) à une position de libération (37.2), à laquelle le contre-épaulement (37) est directement appuyé sur la surface d'appui (27) par la pièce d'extrémité d'enveloppe (35).

2. Dispositif selon la revendication 1, **caractérisé en ce que** la pièce d'espacement (21), par sa manette (43), peut être, en cas de besoin, de nouveau introduite (40') de sa position de libération (37.2) à la position active (37.1), entre la pièce d'extrémité d'enveloppe (35) et la face d'appui (27).

3. Dispositif selon la revendication 1 ou 2, **caractérisé en ce que**, au câble de Bowden (30), est associé un groupe de pièces d'espacement, ayant des épaisseurs différentes, dont l'une peut être sélectionnée au choix et peut être introduite à la position active (37.1), entre la pièce d'extrémité d'enveloppe (35) et la face d'appui (27).

4. Dispositif selon la revendication 1 ou 2, **caractérisé en ce que** l'introduction (40') et l'enlèvement (40) de la pièce d'espacement (21) se font en direction transversale - par rapport à l'allure du câble de Bowden (30).

5. Dispositif selon l'une des revendications 1 à 3, **caractérisé en ce que** la pièce d'espacement présente plusieurs épaisseurs différentes les unes des autres, dont, au choix, celle que l'on a en position active (37.1), entre la pièce d'extrémité d'enveloppe (35) et l'épaulement d'appui (27), est celle qui produit l'espacement (44) souhaité, entre l'épaulement d'appui (27) et le contre-épaulement (37).

6. Dispositif selon l'une des revendications 1 à 5, **caractérisé en ce que** la pièce d'espacement (21) est assurée à sa position active (37.1) à l'aide de moyens d'encliquetage (24, 39).

7. Dispositif selon l'une des revendications 1 à 6, **caractérisé en ce que** la pièce d'espacement (21) est fourchue (23) et la pièce d'extrémité d'enveloppe (35) est cintrée (38),
où, à la position active (37.1), une ouverture de fourche (23) entoure le cintre (38), de la pièce d'extrémité d'enveloppe (35),
et **en ce que** la manette (43) de la pièce d'espacement (21) est placée sur l'extrémité opposée à l'ouverture de fourche (23).

8. Dispositif selon les revendications 6 et 7, **caractérisé en ce que** la fourche (24) et le cintre (39) lui-même forment des moyens d'encliquetage, sachant que les branches de fourche, à la position active (37.1), entourent avec liaison à ajustement de formes la section transversale cintrée (39), et les branches de fourches et/ou la section transversale de cintre sont déformables élastiquement (42).

9. Dispositif selon la revendication 7 ou 8, **caractérisé en ce que** la pièce d'espacement (21) est une branche d'une gâche (20) en forme de (U), dont la barre de U (43) sert de manette de traction pour le détachement (40) de la pièce d'espacement (21), vis-à-vis de la pièce d'extrémité d'enveloppe (35).

10. Dispositif selon la revendication 9, **caractérisé en ce que** l'autre branche de U (22) comprend les moyens d'encliquetage (24), à l'aide desquels la gâche en U (20) est assurée sur la pièce d'extrémité d'enveloppe (35).
